Europäisches Patentamt

European Patent Office

Office européen des brevets

(19)

(11) EP 0 689 732 B1

(12) **EUROPÄISCHE PATENTSCHRIFT**

(45) Veröffentlichungstag und Bekanntmachung des Hinweises auf die Patenterteilung:
**15.01.1997 Patentblatt 1997/03**

(21) Anmeldenummer: **94908947.8**

(22) Anmeldetag: **02.03.1994**

(51) Int Cl.⁶: **H02M 7/757**, H02J 3/36

(86) Internationale Anmeldenummer:
**PCT/DE94/00227**

(87) Internationale Veröffentlichungsnummer:
**WO 94/22211 (29.09.1994 Gazette 1994/22)**

(54) **VERFAHREN UND REGELANORDNUNGEN ZUR GLEICHSTROMÜBERTRAGUNG**

PROCESS AND REGULATING ARRANGEMENTS FOR D.C. TRANSMISSION

PROCEDE ET DISPOSITIFS DE REGULATION UTILES POUR LA TRANSMISSION DE COURANT CONTINU

(84) Benannte Vertragsstaaten:
**DE SE**

(30) Priorität: **16.03.1993 DE 4308362**

(43) Veröffentlichungstag der Anmeldung:
**03.01.1996 Patentblatt 1996/01**

(73) Patentinhaber: **SIEMENS AKTIENGESELLSCHAFT**
**80333 München (DE)**

(72) Erfinder: **KARLECIK-MAIER, Franz**
**D-91315 Höchstadt (DE)**

(56) Entgegenhaltungen:
**EP-A- 0 087 640**      **WO-A-91/01061**
**US-A- 4 210 956**      **US-A- 4 563 732**

**Beschreibung**

Die Erfindung bezieht sich auf ein Verfahren zur Gleichstromübertragung zwischen zwei Stromrichtern. Sie bezieht sich auch auf eine Regelanordnung für die Gleichstromübertragung zwischen zwei Wechselstromnetzen.

Zum Übertragen elektrischer Energie zwischen zwei Wechselspannungsnetzen wird in bestimmten Fällen von der Gleichstromübertragung Gebrauch gemacht. Dabei wird an das erste Wechselspannungsnetz ein Gleichrichter angeschlossen, der einen Gleichstrom erzeugt, welcher wiederum einem Wechselrichter zugeführt wird. Der Wechselrichter ist mit dem zweiten Wechselspannungsnetz verbunden. Auf diese Weise sind die beiden Wechselspannungsnetze über eine Gleichstromverbindung miteinander gekoppelt. Die Energieflußrichtung kann dabei umkehrbar sein. Eine derartige Anordnung mit Gleichstromübertragung zwischen zwei Stromrichtern ist z . B. aus der WO 92/22 118 bekannt.

Für den Betrieb derartiger Anordnungen werden unterschiedliche Regelverfahren angewendet. Ein Beispiel hierfür ist das sogenannte Marginalstromverfahren. Hierbei weisen Gleichrichter und Wechselrichter jeweils einen Stromregler auf, deren Kennlinien um einen Marginalstrom voneinander versetzt sind. Es ist dabei auch üblich, daß beide Stromrichter einen Spannungsregler aufweisen. Auf diese Weise ist jedem Stromrichter eine genau definierte Arbeitskennlinie zugeordnet, welche einen Strom- und Spannungsast aufweist. Der Schnittpunkt der jeweiligen Arbeitskennlinien ergibt dann im Betrieb den Arbeitspunkt der Gesamtanordnung. Je nach momentaner Betriebssituation ist bei einer derartigen Anordnung immer nur ein Regler, nämlich der für Strom oder Spannung, ggf. über eine Minimum- oder Maximumauswahl, aktiv. Die übrigen Regler sind nicht im Eingriff.

Wenn Störungen, z.B. durch harmonische Überlagerungen des Gleichstromes, auftreten, kann sich der momentane Arbeitspunkt entsprechend der harmonischen Schwingungen dem Sollarbeitspunkt nähern oder von diesem entfernen.

Aus der EP-A-0 087 640 ist ein Verfahren und eine Regelanordnung zur Gleichstromübertagung zwischen zwei Stromrichtern bekannt, wobei den Steuereinrichtungen der Stromrichter jeweils ein Steuersignal zugeführt wird. Die Stromrichter weisen einen gemeinsamen Arbeitspunkt auf. Zur Bildung der jeweils aktiven Steuersignale wird dabei über eine jeweilige Maximumauswahl zwischen zwei zur Verfügung stehenden Steuersignalen ausgewählt. Es kommt dabei jeweils das eine oder das andere Steuersignal zum Eingriff. Dieses Verfahren arbeitet auch nach dem Marginalstromprinzip.

Der Erfindung liegt die Aufgabe zugrunde, ein Verfahren und eine Regelanordnung anzugeben, durch die das Regelverhalten bei der Gleichstromübertragung zwischen zwei Stromrichtern, die jeweils an ein Wechselspannungsnetz angeschlossen sind gegenüber dem Stand der Technik verbessert wird.

Diese Aufgabe wird erfindungsgemäß gelöst durch ein Verfahren zur Gleichstromübertragung zwischen zwei Stromrichtern gemäß Anspruch 1.

Das neue Verfahren kann als multidimensionale Vektorregelung bezeichnet werden, welche beliebig viele Freiheitsgrade aufweist, wobei die hierzu eingesetzten Regler (Reglerabweichungen) so aktiviert sind, daß sie - obwohl autark arbeitend - dem Gesamtverhalten der Gleichstromübertragung dienlich sind. Es können dabei vielfältige Sonderbedingungen und Strategien, z.B. für Fehlerfälle, im Betrieb der Gleichstromübertragung berücksichtigt werden. Die neue Reglerstruktur eignet sich insbesondere für digitale Regelanordnungen, die mit einem Rechner und einem Programm realisiert werden. Eine Ausführung in analoger Technik ist jedoch auch ohne weiteres möglich. Die Erfindung eignet sich auch für einen Mehrpunktbetrieb mit mehr als 2 Stromrichtern. Eine bevorzugte Ausführungsform ist dreidimensional ausgeführt. Weitere vorteilhafte Weiterbildungen sind in den Ansprüchen 2 bis 4 angegeben.

Die obengenannte Aufgabe bezüglich der Regelanordnung wird erfindungsgemäß gelost durch eine Regelanordnung gemäß Anspruch 5. Eine erfindungsgemäße Regelanordnung zur Durchführung des Verfahrens gemäß Anspruch 1 ist im Anspruch 11 angegeben.

Auf diese Art und Weise kann eine völlig neue Reglerstruktur für den Betrieb der Gleichstromübertragung bereitgestellt werden. Es wurde dabei der herkömmliche hierarchisch geordnete Regleraufbau, insbesondere für den Wechselrichter, verlassen und eine völlig neue Reglerstruktur entworfen, die einen Einfluß beliebiger Regelabweichungen erlaubt. Der Aufbau der neuen Reglerstruktur ist dabei verblüffend einfach und erlaubt eine multidimensionale Regelung. Weitere günstige Ausbildungen sind in den übrigen Ansprüchen angegeben.

Die Erfindung und weitere Vorteile werden nachfolgend anhand von Ausführungsvarianten und der Zeichnung beispielhaft näher erläutert. Es zeigen:

FIG 1        eine Anordnung zur Gleichstromübertragung;
FIG 2        eine erste Reglerstruktur, die für einen Gleichrichter vorgesehen ist;
FIG 3        eine zweite Reglerstruktur, die für einen Wechselrichter vorgesehen ist;
FIG 4        ein Diagramm zum Arbeitspunkt der Anordnung und
FIG 5 und 6     Beispiele von Reglern.

Die im folgenden verwendeten Bezugszeichen und Abkürzungen sowie ihre Bedeutungen sind am Ende dieser Beschreibung in einer Liste zusammengestellt.

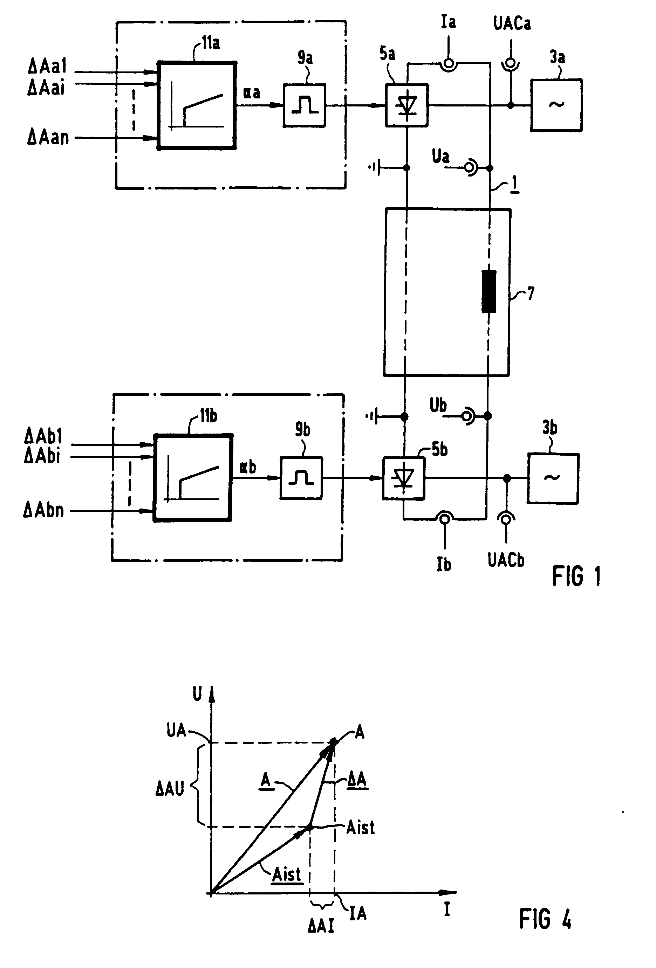

FIG 1 zeigt eine prinzipielle Anordnung 1, insbesondere eine HGÜ-Anlage, zur Gleichstromübertragung, bei der ein erstes und ein zweites Drehstromnetz 3a bzw. 3b elektrisch miteinander verbunden sind. Die Anordnung 1 weist dazu zwei Stromrichter 5a, 5b auf, die gleichstromseitig über eine gegebenenfalls geerdete Gleichstromleitung 7 oder Gleichstromverbindung miteinander verbunden sind. Drehstromseitig sind die beiden Stromrichter 5a, 5b jeweils mit einem der Drehstromnetze 3a bzw. 3b verbunden. Je nach Ausbildung der Gleichstromleitung 7 kann die gesamte Anordnung 1 z. B. als Kurzkupplung oder auch als Langstreckenübertragung (Long-Distance) ausgebildet sein. Dies betrifft insbesondere die Anwendung bei Hochspannungs-Gleichstrom-Übertragungsanlagen (HGÜ), die zum Koppeln von Energienetzen dienen. In den nachfolgenden Ausführungen soll davon ausgegangen werden, daß ein Energietransport vom Drehstromnetz 3a zum Drehstromnetz 3b erfolgt. Dabei ist der eine Stromrichter 5a als Gleichrichter und der andere Stromrichter 5b als Wechselrichter ausgebildet und betrieben. Selbstverständlich ist auch eine Energieumkehr möglich. Die nachfolgenden Ausführungen sind also für die umgekehrte Energierichtung sinngemäß anwendbar. Die Verfahrensweise wird beispielhaft anhand des Gleichrichterzweiges erläutert. Die Anordnung 1 weist an vorgegebenen Stellen nicht näher bezeichnete Meßfühler zum Erfassen der Ströme Ia und Ib, der Spannung UACa, UAcb, Ua und Ub.

Jedem Stromrichter 5a, 5b ist eine Steuereinrichtung 9a bzw. 9b zugeordnet, der von einer Regeleinrichtung IIa bzw. IIb ein zugehöriges Steuersignal, nämlich ein Signal für den Steuerwinkel αa bzw. αb, zugeführt wird. Die Steuerwinkel αa, αb beschreiben die Zündwinkel.

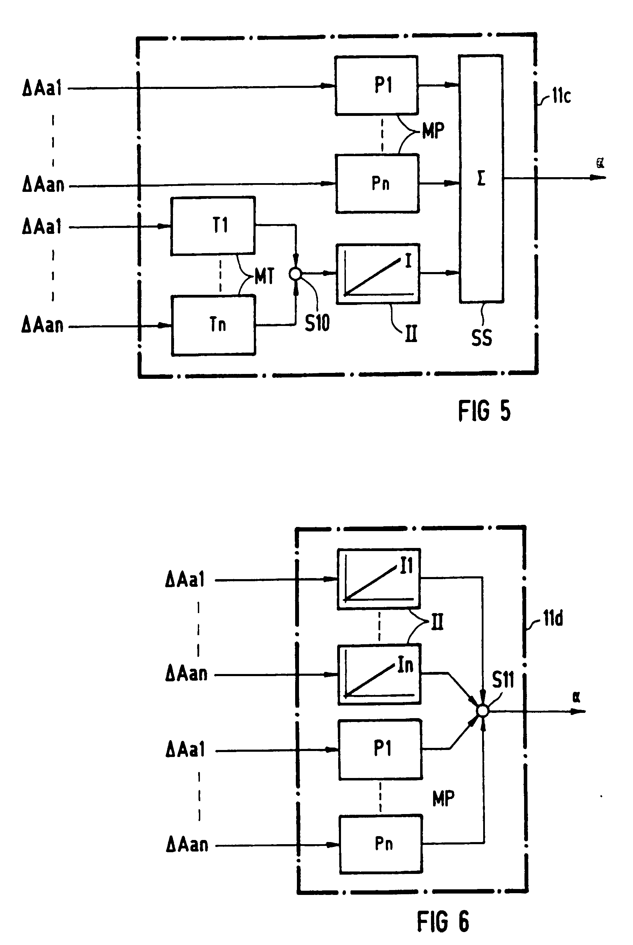

Ausgehend von dieser Konfiguration ist es für den Betrieb der Anordnung 1 wesentlich, daß die beiden Stromrichter 5a, 5b im stationären Betrieb, z. B. bei einer vorgegebenen, zu übertragenden Leistung P, aufeinander eingestellt sind, um einen möglichst verlustfreien und gleichzeitig stabilen Betrieb zu ermöglichen. Sie sind dazu auf einen gemeinsamen Arbeitspunkt A eingestellt, der in FIG 4 in zweidimensionaler Darstellung als I/U-Diagramm gezeigt ist. Dieser Arbeitspunkt A beschreibt, ausgehend von der zu übertragenden Leistung P den Strom IA und die Spannung UA beim Arbeitspunkt A für die Gleichstromverbindung. Die zu übertragende Leistung P, ist in der Regel ein Wert, der fest vorgegeben und allenfalls in großen Zeitabständen verändert wird. In der Praxis wird dieser Wert beispielsweise durch telefonische Nachrichtenübertragung von einer Umrichterstation zur anderen weitergegeben. Die Leistung P stellt daher sozusagen die stationäre Betriebsleistung dar.

Vorliegend wird nun dieser Arbeitspunkt A als mehrdimensionale Größe betrachtet. Er soll der von beiden Stromrichtern 5a und 5b im Zusammenwirken erreicht werden. Dazu werden den beiden Regeleinrichtungen IIa bzw. IIb Regelabweichungen ΔAai bis ΔAan zugeführt. Mit dieser vektoriellen Betrachtungsweise wird erreicht, daß der jeweilige Stromrichter möglichst auf direktem Wege und schnellstmöglich den Arbeitspunkt A erreicht. Obwohl jede Stromrichterstation für sich autark den Arbeitspunkt A ansteuert, steht dies unter dem Gesamtziel, gemeinsam den Arbeitspunkt A zu erreichen. Es findet also eine gemeinsame Annäherung statt, wobei immer beide Umrichterstationen einen Beitrag leisten. Es ist zumindest immer ein Regeleingriff bei zwei Stromrichtern gleichzeitig vorhanden, gegenüber nur einem beim Stand der Technik.

Zur näheren Erläuterung dieser Arbeitsweise wird auf FIG 4 verwiesen. Dort ist im Stromspannungsdiagramm I/U ein vorgegebener Arbeitspunkt A gezeigt, den es zu erreichen gilt. Der momentane Arbeitspunkt ist mit Aist bezeichnet. Diese beiden Arbeitspunkte A, <u>Aist</u> werden nun als vektorielle Größen <u>A</u> und <u>Aist</u> betrachtet. Aus der Differenz dieser beiden Vektoren ergibt sich der Regelabweichungsvektor <u>ΔA</u>. Die Projektion dieses Vektors erzeugt die Regelabweichungen ΔAl und ΔAU, die den Regelabweichungen eines Strom- bzw. Spannungsreglers in der herkömmlichen Technik entsprechen. Um den Arbeitspunkt A (durch Nachführung der Stromrichtersteuersignale) zu erreichen, ist es erforderlich, daß der Betrag der Regelabweichung ΔA auf Null geregelt wird, d. h. ΔAU und ΔAl müssen gleichzeitig Null sein. Daraus ergibt sich, daß diese Regelaufgabe wahlweise mit ein oder zwei Reglern ausgeführt werden kann.

Verallgemeinert wird bei dem vorliegenden Regelverfahren von der Gleichung

$$\Delta A = \Delta i + \Delta u + ........ + \Delta n$$

ausgegangen. Darin bedeutet Δi, Δu bis Δn die jeweiligen Regelabweichungen einer Regelgröße oder Dimension, wobei der Index den Bezug zur jeweiligen Regelgröße angibt. Hieraus ergibt sich für einen mehrdimensionalen Regler der Ansatz

$$\alpha = \alpha_i + \alpha u + ... + \alpha n,$$

wobei α der Steuerwinkel ist, der sich aus Teilsteuerwinkeln αi bis αn zusammensetzt. Diese können von Teilreglern (fiktive Teilregler) geliefert werden. Unter der Voraussetzung, daß die Teilregler PI-Regler sind, ergibt sich:

$$\alpha = (K_{Pi} + \frac{1}{sT_{Ii}}) \cdot di + (K_{Pu} + \frac{1}{sT_{Iu}}) \cdot du + \ldots + (K_{Pn} + \frac{1}{sT_{In}}) \cdot dn),$$

wobei

$$\alpha_i = (K_{Pi} + \frac{1}{sT_{Ii}}) \cdot di$$

der Teilsteuerwinkel eines Stromreglers,

$$\alpha_u = (K_{Pu} + \frac{1}{sT_{Iu}}) \cdot du$$

der Teilsteuerwinkel eines Spannungsreglers und

$$\alpha_n = (K_{Pn} + \frac{1}{sT_{In}}) \cdot dn$$

der Teilsteuerwinkel der n-ten Regelgröße ist.

Sortiert nach P- und I- Anteile kann geschrieben werden:

$$\alpha = K_{Pi} \cdot di + K_{Pu} \cdot du + \ldots + K_{Pn} \cdot dn + \frac{1}{sT_I} \cdot \left[ \frac{T_I}{T_{Ii}} \cdot di + \frac{T_I}{T_{Iu}} \cdot du + \ldots + \frac{T_I}{T_{In}} \cdot \right]$$

oder

$$\alpha = K_{Pi} \cdot di + K_{Pu} \cdot du + \ldots + K_{Pn} \cdot dn + \frac{1}{sT_I} \cdot [T_i \cdot di + T_u \cdot du + \ldots + T_n \cdot dn].$$

Dabei gilt:

$$T_i = \frac{T_I}{T_{Ii}}, \ T_u = \frac{T_I}{T_{Iu}} \text{ und } T_n = \frac{T_I}{T_{In}}.$$

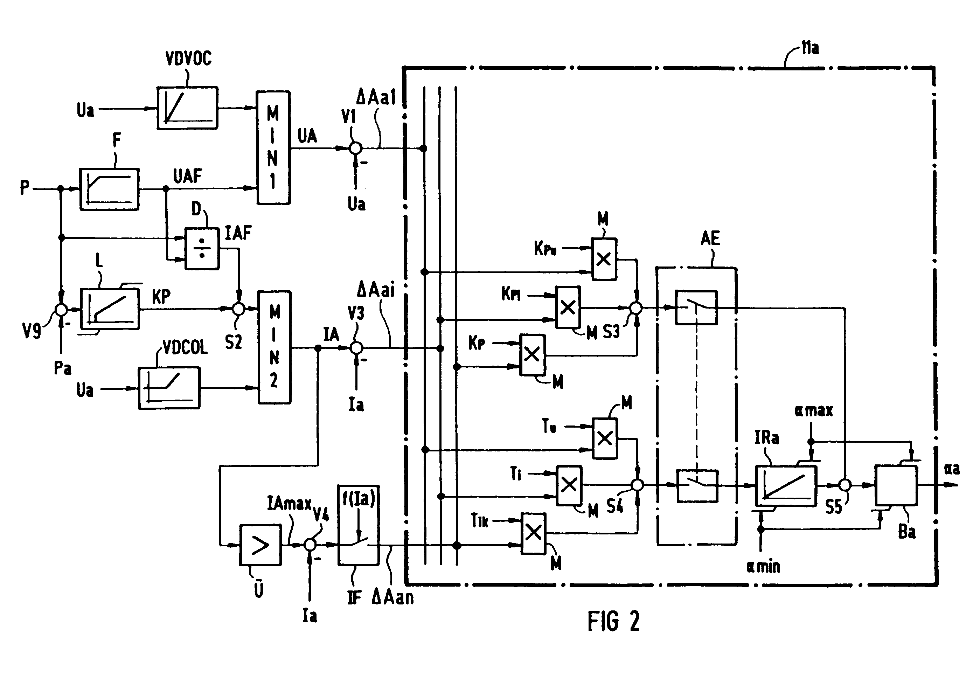

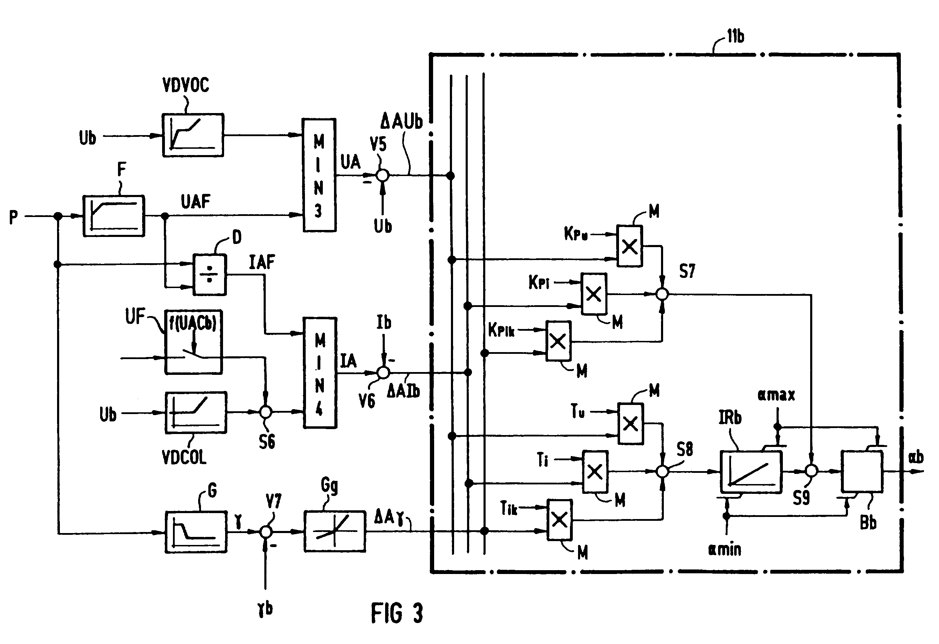

Hieraus ergibt sich der Aufbau eines mehrdimensionalen Reglers. Die Figuren 2 und 3 zeigen beispielhaft Ausführungen von Regleranordnungen mit Regeleinrichtungen IIa, IIb mit einer dreidimensionalen Struktur, die sich für einen Einsatz bei der Anordnung Ia in FIG 1 eignen. Die Figuren sind dabei für den Fachmann selbsterläuternd. Eine Erweiterung auf höherdimensionale Regelkonzepte ist möglich.

FIG 2 zeigt eine Konfiguration für den monopolaren Betrieb des Stromrichters 5a, der als Gleichrichter arbeitet. Die Regeleinrichtung IIa ist als Vektorregler aufgebaut, der sich für eine multidimensionale Regelung eignet. Der gesamte Regelzweig des Gleichrichters weist eine hierarchische Struktur auf.

Ausgehend von der vorgegebenen Leistung P (Solleistung) werden zunächst mit Hilfe eines Funktionsgebers F und eines Dividierers D eine feste Arbeitspunktspannung UAF und ein fester Arbeitspunktstrom IAF gebildet. Das Ausgangssignal eines Funktionsgebers VDVOC mit spannungsabhängiger Charakteristik (**V**OLTAGE **D**EPENDENT **V**OLTAGE **O**RDER **C**HARACTERISTIC) wird zusammen mit der festen Arbeitspunktspannung UAF über eine Minimumauswahl MIN 1 geführt, welcher ein Vergleicher V1 zum Bilden einer Spannungsregelabweichung ΔAUa nachgeschaltet ist. Dem Vergleicher ist dazu der Spannungsmeßwert Ua zugeführt. Der Funktionsgeber VDVOC weist bevorzugt eine Kennlinie mit einer Geraden durch den Ursprung auf. Die Kennlinie ist abhängig von der vorgesehenen Strategie. Andere Kennlinien für andere Strategien sind jedoch auch möglich.

Die Abweichung zwischen der Leistung P und der gemessenen Leistung Pa, die aus Strom Ia und Spannung Ua ermittelt wird, wird mit einem Vergleicher V9 ermittelt. Ein daraus von einem Leistungsregler L erzeugtes Korrektursignal KP wird zusammen mit dem festen Arbeitspunktstrom IAF einem Summierer S2 zugeführt, der einem zweiten Minimumglied MIN2 vorgeschaltet ist. Diesem wird zusätzlich ein Signal eines weiteren Funktionsgebers VDCOL (**V**OLTAGE **D**EPENDENT **C**URRENT **O**RDER **L**IMITATION) zugeführt, der im Fehlerfall die Höhe des Arbeitspunktstromes IA bestimmt. Dieser Wert wird in einem weiteren Vergleicher V3 mit dem tatsächlichen Strommeßwert Ia verglichen, um die Regelabweichung des Stromes $\Delta$Ala zu erhalten.

Über einen weiteren Zweig ist ein Eingriff eines Überstromreglers Ü möglich, der mittels eines Funktionsgliedes IF wirksam wird, wenn der Stromsollwert IA einen vorgebbaren Wert überschreitet. Es wird dann ein Anderungssignal $\Delta$iK gebildet. Die Regelabweichungen $\Delta$AUa, $\Delta$Ala und $\Delta$iK sind ein konkretes Beispiel einer dreidimensionalen Regelung der allgemeinen Darstellung in FIG 1 mit den Regelabweichungen $\Delta$Aa1 bis $\Delta$Aan.

Alle Änderungssignale $\Delta$AUa, $\Delta$Ala, $\Delta$iK werden anschließend der als Vektorregler ausgebildeten Regeleinrichtung IIa zugeführt, die gemäß der bereits oben beschriebenen Weise arbeitet. Sie kann bei Bedarf auch eine Aktivierungseinheit AE umfassen, mit der der Vektorregler freigegeben, gesperrt oder angehalten werden kann. Die Regeleinrichtung IIa liefert dann den gewünschten Steuerwinkel $\alpha$a. Die Regeleinrichtung IIa ist, wie der Fachmann erkennt, intern entsprechend den oben aufgeführten Gleichungen ausgebildet. Der nähere Aufbau ist der Beschreibung zu FIG 3 zu entnehmen.

FIG 3 zeigt analog hierzu den Aufbau eines Wechselrichterregelungszweiges. Zusätzlich ist noch ein Löschwinkelreglerzweig mit Funktionsgebern G und Gg enthalten. Der Löschwinkelsollwert $\gamma$ wird aus der zu übertragenden Leistung P mit dem Funktionsgeber G bestimmt. Die Streckenverstärkung im Regelkreis für den Löschwinkel wird mit dem Funktionsgeber Gg verändert. Dieser Zweig ist beispielhaft für den monopolaren Betrieb des Stromrichters 5b dargestellt, wobei der hierarchische Aufbau vollständig verlassen wurde. Die Form der VDCOL- und VDVOC-Charakteristiken entsprechen denen des Gleichrichterzweiges. Die Charakteristiken sind derart eingestellt, daß sie ein schnelles Heranführen des Wechselrichters an den Arbeitspunkt A gewährleisten und in der Nähe des Arbeitspunktes A - also wenn quasi der Regelabweichungsvektor $\underline{\Delta A}$ einen vorgebbaren Wert unterschreitet - dem Löschwinkelreglerzweig die Führung überlassen.

Die Regelabweichungen $\Delta$AUb, $\Delta$Aln und $\Delta$Ay werden dabei jeweils zwei Gruppen mit jeweils drei Multiplizierern M zugeführt, denen jeweils die zugeordneten Konstanten $KP_{ik}$ KPu und KPi bzw. Tu, Ti und Tik zugeführt sind. Die Ausgangssignale der Multiplizierer M einer jeden Gruppe werden mit Summierern S8 bzw. S7 summiert. Das eine Summensignal wird einem I-Regler IRb zugeführt, dessen Ausgangssignal mit dem Summensignal des anderen Summierers S7 addiert und über einen Begrenzer Bb geführt wird. Am Ausgang steht dann der Steuerwinkel $\alpha$b zur weiteren Verarbeitung zur Verfügung. Die Regeleinrichtungen IIa und IIb des Gleichrichters 5a und des Wchselrichters 5b unterscheiden sich lediglich durch die Aktivierungseinrichtung AE, die wahlweise, auch beim Wechselrichter 5b, vorgesehen werden kann.

FIG 5 zeigt eine stark vereinfachte Darstellung für den Aufbau einer Regeleinrichtung IIc, wie sie prinzipiell in FIG 2 und 3 Anwendung findet. FIG 6 zeigt eine alternative Ausführung, die in bestimmten Fällen auch eingesetzt werden kann.

Bei der Regeleinrichrtung IIc nach FIG 5 werden die Regelabweichungen $\Delta$Aa1 bis $\Delta$Aan jeweils zugeordneten Multiplizierern MT und MP zugeführt. Die Ausgangssignale der Multiplizierer MT werden addiert und einem I-Regler II zugeführt, dessen Ausgangssignal mit den Ausgangssignalen der Multiplizierer MP zum Steuerwinkel $\alpha$ im Summierer SS aufsummiert wird.

Bei der Regeleinrichtung 11d nach FIG 6 werden die Regelabweichungen $\Delta$Aa1 bis $\Delta$Aan jeweils zugeordneten Multiplizierern MP und I-Reglern II zugeführt. Zum Bilden des Steuerwinkels $\alpha$ werden die Ausgangssignale aller Multiplizierer MP und I-Regler II von einem Summierer S11 addiert.

Zusammenfassend kann das Regelkonzept für die einzelnen Stromrichter folgendermaßen beschrieben werden:

a) am Gleichrichter 5a gibt es eine hierarchische Reglerstruktur; diese umfaßt einen Leistungsregler und einen dreidimensionalen Vektorregler 11a für u, i und $i_{max}$

b) am Wechselrichter 5b gibt es einen dreidimensionalen Vektorregler 11b für u, i und $\gamma$.

Das aufgezeigte Regelverfahren und die zugehörigen Einrichtungen können selbstverständlich im Rahmen von fachmännischen Überlegungen modifiziert oder ergänzt werden. Insbesondere ist es denkbar, die Regelung nach gewichteten Gesichtspunkten mit Hilfe von Fuzzygliedern zu ergänzen. Es ist auch ein neuronale Arbeitsweise denkbar, die selbstlernend ausgeführt ist.

Zur Vervollständigung werden nachfolgend alle in den Figuren verwendeten Bezugszeichen mit Erläuterungen aufgeführt.

1                   Anordnung

| | |
|---|---|
| 3a, 3b | erstes und zweites Drehstromnetz |
| 5a, 5b | Stromrichter |
| 7 | Gleichstromleitung |
| 9a, 9b | Steuereinrichtung |
| 11a, 11b, 11c, 11d | Regeleinrichtung |
| $\alpha$, $\alpha a$, $\alpha b$, $\alpha i$ bis $\alpha n$ | Steuerwinkel |
| A | Arbeitspunkt |
| Ua, Ub | Spannungsmeßwert |
| Ia, Ib | Strommeßwert |
| Pa, Pb | gemessene Leistung |
| P | vorgegebene zu übertragende Leistung |

| | |
|---|---|
| $\Delta AU$, $\Delta AI$, $\Delta u$ bis $\Delta n$, $\Delta iK$, $\Delta \gamma$, $\Delta Aa1$ bis $\Delta Aan$, $\Delta Abi$, $\Delta Abx$, $\Delta AUb$, $\Delta AIb$, $\Delta AUa$, $\Delta AIa$, $\Delta Ab1$ bis $\Delta Abn$ | Regelabweichungen |

| | |
|---|---|
| UA | Arbeitspunktspannung |
| IA | Arbeitspunktstrom |
| UACa, UACb | Wechselspannungsmeßwert |
| IACa, IACb | Wechselstrommeßwert |
| $\gamma$ | Löschwinkelsollwert |
| $\gamma b$ | Ist-Löschwinkel |
| UAF | feste Arbeitpunktspannung |
| IAF | fester Arbeitspunktstrom |
| KG, KP | Korrekturwert |
| L | Leistungsregler |
| G, Gg | Funktionsgeber für Löschwinkelzweig ($\gamma$) |
| F | Funktionsgeber |
| D | Dividierer |
| V1 bis V9 | Vergleicher |
| MIN1, MIN2, MIN3, MIN4 | Minimumglied, -auswahl |
| VDVOC, VDCOL | Strategieglieder, Funktionsgeber |
| Ü | Überstromregler |
| IF, UF | Funktionsglied |
| AE | Aktivierungseinrichtung |
| S2 bis S11, SS | Summierer |
| IRa, IRb, II | I-Regler |
| M, MT, MP | Multiplizierer |
| Ba, Bb | Begrenzer |
| $\alpha max$, $\alpha min$ | vorgebbare Grenzen |
| $I_i$ bis $I_U$ | I-Glied |
| $P_i$ bis $P_U$ | P-Glied |
| Ti bis $T_U$ | T-Glied |
| $\Sigma$ | Summierglied |

| | |
|---|---|
| Index 1 bis n | 1 bis $\infty$ |
| Index i, u bis k | Index mit Bezug auf konkrete Meßgröße |

## Patentansprüche

1. Verfahren zur Gleichstromübertragung zwischen zwei Stromrichtern (5a,5b), insbesondere für eine Hochspannungsgleichscromübertragungsanlage, wobei den Steuereinrichtungen (9a,9b) der Stromrichter (5a,5b) jeweils ein Steuersignal ($\alpha a$, $\alpha b$) zugeführt wird, und wobei Regelabweichungen von einem gemeinsamen Arbeitspunkt (A) der Stromrichter (5a,5b), der von der zu übertragenden Leistung (P) abgeleitet ist, für jeden Stromrichter (5a, 5b) auf Null geregelt werden, **dadurch gekennzeichnet**, daß der Arbeitspunkt (A) als Punkt oder Vektor in einem mehrdimensionalen Raum vorgegeben ist, daß die jeweiligen Steuersignale ($\alpha a$, $\alpha b$) aus Teilsteuersignalen zu-

sammengesetzt werden, welche jeweils in Abhängigkeit von Teilregelabweichungen ($\Delta$Aa1 bis $\Delta$Aan, $\Delta$Ab1 bis $\Delta$Abn,$\Delta$ik,$\Delta\gamma$) vom gemeinsamen Arbeitspunkt (A) gebildet werden, und daß die jeweiligen Teilregelabweichungen ($\Delta$Aa1 bis $\Delta$Aan, $\Delta$Ab1 bis $\Delta$Abn,$\Delta$ik,$\Delta\gamma$) eines Stromrichters (5a,5b) gleichzeitig auf Null geregelt werden.

2. Verfahren nach Anspruch 1, wobei eine gemeinsame Annäherung beider Stromrichter (5a,5b) an den Arbeitspunkt (A) gleichzeitig erfolgt.

3. Verfahren nach Anspruch 1 oder 2, wobei die Teilregelabweichungen ($\Delta$Aai bis $\Delta$Aan,$\Delta$Abi bis $\Delta$Abn) als Abweichungen im mehrdimensionalen Raum vorgegeben werden.

4. Verfahren nach Anspruch 2 oder 3, wobei die Anzahl der für den Raum und für die Teilsteuersignale ($\alpha$i bis $\alpha$n) erforderlichen Dimensionen oder Freiheitsgrade vorgebbar sind.

5. Regelanordnung für eine Gleichstromübertragung zwischen Wechselstromnetzen (3a,3b) mittels Stromrichtern (5a,5b), denen jeweils zugeordnete Steuereinrichtungen (9a,9b) mit Regeleinrichtungen (11a,11b) zur Erzeugung von Steuersignalen ($\alpha$a,$\alpha$b) vorgeschaltet sind, wobei Regelabweichungen von einem gemeinsamen Arbeitspunkt (A) der Stromrichter (5a,5b), der von der zu übertragenden Leistung (P) abgeleitet ist, für jeden Stromrichter (5a, 5b) auf Null geregelt werden, **dadurch gekennzeichnet**, daß der Arbeitspunkt (A) als Punkt oder Vektor in einem mehrdimensionalen Raum vorgegeben ist, daß in den Regeleinrichtungen (11a,11b), ausgehend von Teilregelabweichungen ($\Delta$Aai bis $\Delta$Aan,$\Delta$Abi bis $\Delta$Abn, $\Delta$ik, $\Delta$y) vom gemeinsamen Arbeitspunkt (A) der Stromrichter (5a,5b), Teilsteuersignale umfassende Steuersignale ($\alpha$a,$\alpha$b) gebildet werden, und daß die jeweiligen Teilregelabweichungen ($\Delta$Aai bis $\Delta$Aan,$\Delta$Abi bis $\Delta$Abn, $\Delta$ik, $\Delta\gamma$) eines Steuersignals ($\alpha$a,$\alpha$b) gleichzeitig auf Null geregelt werden.

6. Regelanordnung nach Anspruch 5, **dadurch gekennzeichnet**, daß zumindest eine der Regeleinrichtungen (11a, 11b) eines Stromrichters (5a,5b) zur Erzeugung der Steuersignale ($\alpha$a,$\alpha$b) als Vektorregler ausgebildet ist.

7. Regelanordnung nach Anspruch 6, **dadurch gekennzeichnet**, daß die Anzahl der Dimensionen für den Vektorregler vorgebbar sind.

8. Regelanordnung nach einem der Ansprüche 5 bis 7, **dadurch gekennzeichnet**, daß ausgehend von einer vorgebbaren Anzahl von Regelabweichungen zu einem Arbeitspunkt (A) in einem multidimensionalen Raum für jede Regelabweichung ein P-Glied (Pi bis Pn) vorgesehen ist, deren summierte Ausgangssignale mit einem Ausgangssignal zumindest eines von den Regelabweichungen geführten I-Gliedes (Ii bis In) addiert sind.

9. Regelanordnung nach Anspruch 8, **dadurch gekennzeichnet**, daß jeder Regelabweichung ein I-Glied (Ii bis In) zugeordnet ist.

10. Regeleinrichtung nach Anspruch 9, wobei für jede Regelabweichung ein T-Glied (Ti bis Tn) vorgesehen ist, deren Ausgangssignale addiert dem einen I-Glied (I) zugeführt sind.

11. Regelanordnung zur Durchführung des Verfahrens nach Anspruch 1 für eine Gleichstromübertragung zwischen Drehstromnetzen (3a,3b) mit einer Regeleinrichtung zur Bildung eines Steuersignals ($\alpha$a,$\alpha$b) für zumindest einen Stromrichter (5a,5b) der Gleichstromübertragung, **dadurch gekennzeichnet,** daß ausgehend von einer vorgebbaren Anzahl von Regelabweichungen zu einem Arbeitspunkt (A) in einem multidimensionalen Raum für jede Regelabweichung ein Multiplizierer (MP) vorgesehen ist, deren summierte Ausgangssignale mit einem Ausgangssignal zumindest eines von den Regelabweichungen geführten I-Gliedes (II) addiert sind.

12. Regelanordnung nach Anspruch 11, **dadurch gekennzeichnet,** daß jeder Regelabweichung ein I-Glied (II) zugeordnet ist.

13. Regelanordnung nach Anspruch 11, **dadurch gekennzeichnet,** daß für jede Regelabweichung ein Multiplizierer (MT) vorgesehen ist, deren Ausgangssignale addiert dem einem I-Glied (I) zugeführt sind.

## Claims

1. Method for the transmission of direct current between two static converters (5a, 5b), particularly for a high-voltage direct-current transmission installation, the control devices (9a, 9b) of the static converters (5a, 5b) in each case being supplied with a control signal ($\alpha a$, $\alpha b$), and deviations from a common operating point (A) of the static converters (5a, 5b), which operating point is derived from the power (B) to be transmitted, being controlled to zero for each static converter (5a, 5b), characterized in that the operating point (A) is predetermined as a point or vector in a multidimensional space, in that the respective control signals ($\alpha a$, $\alpha b$) are assembled from part-control signals which are in each case formed in dependence on part-deviations ($\Delta Aa1$ to $\Delta Aan$, $\Delta Ab1$ to $\Delta Abn$, $\Delta ik$, $\Delta \gamma$) from the common operating point (A) and in that the respective part-deviations ($\Delta Aa1$ to $\Delta Aan$, $\Delta Ab1$ to $\Delta Abn$, $\Delta ik$, $\Delta \gamma$) of a static converter (5a, 5b) are simultaneously controlled to zero.

2. Method according to Claim 1, a common approach of the two static converters (5a, 5b) to the operating point (A) being performed simultaneously.

3. Method according to Claim 1 or 2, wherein the part-deviations ($\Delta Aai$ to $\Delta Aan$, $\Delta Abi$ to $\Delta Abn$) are predetermined as deviations in the multi-dimensional space.

4. Method according to Claim 2 or 3, wherein the number of the dimensions or degrees of freedom required for the space and for the part-control signals ($\alpha i$ to $\alpha n$) are predeterminable.

5. Closed-loop control arrangement for the transmission of direct current between alternating-current systems (3a, 3b), by means of static converters (5a, 5b), which are in each case preceded by associated control devices (9a, 9b) with closed-loop control devices (11a, 11b) for generating control signals ($\alpha a$, $\alpha b$), and deviations from a common operating point (A) of the static converters (5a, 5b), which is derived from the power (B) to be transmitted, being controlled to zero for each static converter (5a, 5b), characterized in that the operating point (A) is predetermined as a point or vector in a multidimensional space, in that in the closed-loop control devices (11a, 11b), control signals ($\alpha a$, $\alpha b$) comprising part-control signals are formed, starting with part-deviations ($\Delta Aai$ to $\Delta Aan$, $\Delta Abi$ to $\Delta Abn$, $\Delta ik$, $\Delta \gamma$), from the common operating point (A) of the control signal ($\alpha a$, $\alpha b$) and in that the respective part-deviations ($\Delta Aa1$ to $\Delta Aan$, $\Delta Ab1$ to $\Delta Abn$, $\Delta ik$, $\Delta \gamma$) of a static converter (5a, 5b) are simultaneously controlled to zero.

6. Closed-loop control arrangement according to Claim 5, characterized in that at least one of the closed-loop control devices (11a, 11b) of a static converter (5a, 5b) is constructed as vector controller for generating the control signals ($\alpha a$, $\alpha b$).

7. Closed-loop control arrangement according to Claim 6, characterized in that the number of dimensions for the vector controller are predeterminable.

8. Closed-loop control arrangement according to one of Claims 5 to 7, characterized in that a P element (Pi to Pn) is provided for each deviation, starting from a predeterminable number of deviations to form an operating point (A) in a multi-dimensional space, the added output signals of which P element are added to an output signal of at least one I element (Ii to In) controlled by the deviations.

9. Closed-loop control arrangement according to Claim 8, characterized in that one I element (Ii to In) is allocated to each deviation.

10. Closed-loop control arrangement according to Claim 9, wherein a T element (Ti to Tn) is provided for each deviation, the output signals of which T element, added, are supplied to one I element (I).

11. Closed-loop control arrangement for carrying out the method according to Claim 1 for the transmission of direct current between three-phase systems (3a, 3b) having a closed-loop control device for forming a control signal ($\alpha a$, $\alpha b$) for at least one static converter (5a, 5b) of the direct-current transmission, characterized in that one multiplier (MP) is provided for each deviation, starting from a predeterminable number of deviations to form an operating point (A) in a multi-dimensional space, the added output signals of which multiplier are added to an output signal of at least one I element (II) controlled by the deviations.

12. Closed-loop control arrangement according to Claim 11, characterized in that one I element (II) is allocated to each deviation.

13. Closed-loop control arrangement according to Claim 11, characterized in that one multiplier (MT) is provided for each deviation, the output signals of which multiplier, added, are supplied to one I element (I).

**Revendications**

1. Procédé pour la transmission de courant continu entre deux convertisseurs (5a, 5b), notamment pour un dispositif de transmission de courant continu à haute tension, dans lequel on envoie un signal ($\alpha$a, $\alpha$b) de commande au dispositif (9a, 9b) de commande du convertisseur (5a, 5b), et dans lequel on règle à zéro pour chaque convertisseur (5a, 5b) des écarts de régulation d'un point (A) de travail commun des convertisseurs (5a, 5b), qui se déduit de la puissance (P) à transmettre, caractérisé en ce que le point (A) de travail est fourni sous la forme d'un point ou d'un vecteur dans un espace à plusieurs dimensions, en ce que chacun des signaux ($\alpha$a, $\alpha$b) de commande est composé de signaux de commande partiels, qui sont chacun formés en fonction d'écarts de régulation ($\Delta$Aa1 à $\Delta$Aan, $\Delta$Ab1 à $\Delta$Abn, $\Delta$Aik, $\Delta\gamma$) partiels du point (A) de travail commun, et en ce que les écarts ($\Delta$Aa1 à $\Delta$Aan, $\Delta$Ab1 à $\Delta$Abn, $\Delta$ik, $\Delta\gamma$) de régulation partiels d'un convertisseur (5a, 5b) sont mis à zéro simultanément.

2. Procédé suivant la revendication 1, dans lequel une approximation commune des deux convertisseurs (5a, 5b) a lieu simultanément au point (A) de travail.

3. Procédé suivant la revendication 1 ou 2, dans lequel les écarts ($\Delta$Aai à $\Delta$Aan, $\Delta$Abi à $\Delta$Abn) de régulation partiels sont fournis en tant qu'écarts dans un espace à plusieurs dimensions.

4. Procédé suivant la revendication 2 ou 3, dans lequel les nombres de dimensions ou de degrés de liberté nécessaires pour l'espace et pour les signaux ($\alpha$i à $\alpha$n) de commande partiels sont donnés à l'avance.

5. Dispositif de régulation pour une transmission de courant continu entre des réseaux (3a, 3b) alternatifs au moyen de convertisseurs (5a, 5b), dont les dispositifs (9a, 9b) de commande associés comportant des dispositifs (11a, 11b) de régulation pour la production de signaux ($\alpha$a, $\alpha$b) de commande sont montés en série, dans lequel des écarts de régulation par rapport à un point (A) de travail commun des convertisseurs (5a, 5b), qui se déduit de la puissance (P) à transmettre, sont mis à zéro pour chaque convertisseur (5a, 5b), caractérisé en ce que le point (A) de travail est fourni en tant que point ou vecteur dans un espace à plusieurs dimensions, en ce qu'il est formé dans les dispositifs (11a, 11b) de régulation, issus d'écarts ($\Delta$Aai à $\Delta$Aan, $\Delta$Abi à $\Delta$Abn, $\Delta$ik, $\Delta\gamma$) de régulation partiels par rapport au point (A) de travail des convertisseurs (5a, 5b), des signaux ($\alpha$a, $\alpha$b) de commande partiels comprenant des signaux de commande partiels, et en ce que les écarts ($\Delta$Aai à $\Delta$Aan, $\Delta$Abi à $\Delta$Abn, $\Delta$ik, $\Delta\gamma$) de régulation partiels respectifs d'un signal ($\alpha$a, $\alpha$b) de commande sont mis à zéro simultanément.

6. Dispositif de régulation suivant la revendication 5, caractérisé en ce qu'au moins l'un des dispositifs (11a, 11b) de régulation d'un convertisseur (5a, 5b) pour la production de signaux ($\alpha$a, $\alpha$b) de commande est formé en tant que régulateur de vecteur.

7. Dispositif de régulation suivant la revendication 6, caractérisé en ce que le nombre de dimensions du régulateur de vecteur est donné à l'avance.

8. Dispositif de régulation suivant l'une des revendications 5 à 7, caractérisé en ce qu'à partir d'un nombre donné à l'avance d'écarts de régulation par rapport à un point (A) de travail dans un espace à plusieurs dimensions, il est prévu un organe P (Pi à Pn) pour chaque écart de régulation, dont les signaux de sortie sommés sont additionnés à un signal de sortie d'au moins un des organes I (Ii à In) issus des écarts de régulation.

9. Dispositif de régulation suivant la revendication 8, caractérisé en ce qu'un organe I (Ii à In) est associé à chaque écart de régulation.

10. Dispositif de régulation suivant la revendication 9, dans lequel il est prévu un organe T (Ti à Tn) pour chaque écart de régulation, dont les signaux de sortie sommés sont envoyés à l'organe I (I) respectif.

11. Dispositif de régulation pour la mise en uvre du procédé suivant la revendication 1 pour une transmission de courant continu entre des réseaux (3a, 3b) alternatifs comportant un dispositif de régulation pour la formation d'un signal ($\alpha$a, $\alpha$b) de commande pour au moins un convertisseur (5a, 5b) de la transmission de courant continu, caractérisé en ce que, à partir d'un nombre donné d'écarts de régulation par rapport à un point (A) de travail dans un espace à plusieurs dimensions, il est prévu un multiplicateur (MP) pour chaque écart de régulation, dont les signaux de sortie sommés sont additionnés à un signal de sortie d'au moins un des organes I (II) issus des écarts de régulation.

**12.** Dispositif de régulation suivant la revendication 11, caractérisé en ce que chaque écart de régulation est associé à un organe I (II).

**13.** Dispositif de régulation suivant la revendication 11, caractérisé en ce que, il est prévu un multiplicateur (MT) pour chaque écart de régulation, dont les signaux de sortie additionnés sont envoyés à un organe I (I).

FIG 1

FIG 4

FIG 2

FIG 3

FIG 5

FIG 6